(19) Europäisches Patentamt

European Patent Office

Office européen des brevets

(11) Veröffentlichungsnummer: **0 276 387 B1**

(12) # EUROPÄISCHE PATENTSCHRIFT

(45) Veröffentlichungstag der Patentschrift: **06.05.92**

(21) Anmeldenummer: **87116662.5**

(22) Anmeldetag: **11.11.87**

(51) Int. Cl.⁵: **F16F 13/00**

(54) **Auflager.**

(30) Priorität: **20.01.87 DE 3701490**

(43) Veröffentlichungstag der Anmeldung:
**03.08.88 Patentblatt 88/31**

(45) Bekanntmachung des Hinweises auf die
Patenterteilung:
**06.05.92 Patentblatt 92/19**

(84) Benannte Vertragsstaaten:
**DE FR GB IT**

(56) Entgegenhaltungen:
**WO-A-88/03618      CH-A- 415 184**
**DE-A- 3 405 907      DE-B- 1 110 475**
**DE-C- 3 024 090      FR-A- 933 704**
**FR-A- 2 274 833      GB-A- 2 027 517**
**US-A- 2 859 978**

(73) Patentinhaber: **WOCO Franz-Josef Wolf & Co.**
**Sprudelallee 19**
**W-6483 Bad Soden-Salmünster(DE)**

(72) Erfinder: **Wolf, Franz Josef**
**Sprudelallee 19**
**W-6483 Bad Soden-Salmünster(DE)**
Erfinder: **Pletsch, Hubert**
**Am Ouellenrain 13**
**W-6483 Bad Soden-Salmünster(DE)**

(74) Vertreter: **Jaeger, Klaus, Dipl.-Chem. Dr.**
**Jaeger, Steffens & Köster Patentanwälte**
**Pippinplatz 4a**
**W-8035 München-Gauting(DE)**

EP 0 276 387 B1

## Beschreibung

Die Erfindung betrifft ein Auflager.

Ein weiches Auflager beschreibt dagegen des nicht vorveröffentlichte Stand der Technik (EP 269 890 A1 (& WO-A-88/03618)). Dieses Lager ist ein Gummi-Metall-Lager mit ungewöhnlich weicher Federkennlinie und einer für solche Lager mechanisch ungewöhnlich großen Festigkeit, insbesondere Quersteifigkeit. Zudem weist das Lager eine sehr gute akustische Abkopplung zwischen Auflager und Widerlager auf. Dieses ältere Lager ist jedoch ungedämpft.

Aus der Offenlegungsschrift GB-A-2 027 512 ist ein federnder Dämpfer bekannt, bei dem der gesamte Querschnitt des mit einer Dampfungsflüssigkeit gefüllten Dämpfergehäuses bis auf einen Randbypass von einer Tauchkolbenplatte erfüllt ist, die einstückig mit dem Auflageranschluß verbunden ist. Dieser Tauchkolbendämpfer wird durch eine Stahlspiralfeder als Haupttragfeder und ergänzend durch eine mit Formblechen versteifte Gummikegelmantelfeder abgefedert. Über das Druckfluid und die Stahlfeder ist das Auflager mehrfach mit dem Widerlager akustisch kurzgeschlossen. Eine akustische Entkopplung ist mit diesem bekannten Dämpfer ebensowenig zu erreichen wie eine weiche gedämpfte Federung, da der Gummifederkegel in der beschriebenen, durch Formbleche versteiften Tragfederfunktion eine steile Progression der Kennlinie zeigt.

Der vorliegenden Erfindung liegt die Aufgabe zugrunde, ein akustisch abgekoppeltes weiches und mechanisch stabiles Auflager, insbesondere in Gummi-Metall-Bauweise der vorstehend genannten Art, mit abstimmbarer Dämpfung zu versehen, ohne daß die anderen, vorstehend genannten Feder eigenschaften des Auflagers dadurch wesentlich beeinträchtigt werden.

Zur Lösung dieser Aufgabe weist ein solches Auflager erfindungsgemäß die im Anspruch 1 genannten Merkmale auf.

Wesentlicher Grundgedanke der Erfindung ist also die hermetische Verkapselung der aus einem Elastomer, insbesondere einer Lochgummifeder, bestehenden Tragfeder des Auflagers in einem einseitig offen ausgebildeten becherförmigen Widerlagerelement, dessen offene Seite durch ein Auflastträgerelement und eine querliegende radial gestauchte, als Steuerfeder wirkende Elastomerscheibe, die zu einem fluiddichten Verbundsystem verbunden sind, ebenfalls hermetisch fluiddicht verschlossen ist, anzuordnen. Das Innere des so aufgebauten Lagers ist mit einem inkompressiblen Dämpfungsfluid gefüllt.

Das Innere des Auflagers ist mit einer inkompressiblen Dämpfungsflüssigkeit gasfrei nach Art eines gebräuchlichen Hydrolagers gefüllt. Abweichend von einem gebräuchlichen Hydrolager weist das Auflager gemäß der Erfindung jedoch keine Ausweichkammer für das Dämpfungsfluid auf, und dient die Tragfeder nicht gleichzeitig als Kammerwand für die Druckkammer des Dämpfungssystems. Die Tragfeder des Auflagers gemäß der Erfindung kann dadurch sehr weich eingestellt werden, beispielsweise als Lochgummipuffer ausgebildet sein, wodurch im Gegensatz zum bekannten Hydrolager eine sehr gute akustische Dämmung und Abkopplung zwischen Auflager und Widerlager erhalten wird. Ebenfalls im Gegensatz zum gebräuchlichen Hydrolager verformt bei dem Auflager gemäß der Erfindung die beim Einschwingen des Auflastträgers verdrängte Dämpfungsflüssigkeit die Steuerfeder-Kreisscheibe, die auch bei vergleichsweise fester Einstellung und/oder größerer Verformung die Federkenndaten des Auflagers kaum beeinflußt, da sie, unter radialer Stauchung in ihrer neutralen Hauptebene gehalten, in Richtung ihrer Normalen eine Federkonstante mit einem Wert von praktisch gleich Null aufweist. Die Beschränkung des axialen Federweges der Steuerfeder auf einen mehr oder minder engen, um den Neutralbereich liegenden Bereich wird vorzugsweise durch mindestens einen zusätzlichen Federwegbegrenzer für die Steuerfeder in Form von einer oder zwei axial übereinanderliegend quer zur Richtung der Federauslenkung der Tragfeder und der Steuerfeder angeordnete und entweder am Auflastträger oder am Kragen des Widerlagerbechers gehalterte plane oder profilierte Anschlagscheiben oder Anschlagscheibenringe bewirkt werden. Durch die Ausbildung dieser Federwegbegrenzer und ihre Profilierung, durch die Stärke und Vorspannung der Steuerfeder, sowie durch die Härte des Elastomers, aus dem die Steuerfeder hergestellt ist, kann die Dämpfungscharakteristik des Auflagers gemäß der Erfindung in weiten Bereichen je nach den Anforderungen des Einsatzzwecks angepaßt und abgestimmt werden.

Diese Möglichkeiten der Beeinflussung und Gestaltung der Kenndaten der Dämpfung des Auflagers können dadurch noch erweitert werden, daß der Kragenabschnitt des Widerlagerbechers mit einem deutlich größeren inneren Querschnitt als der verbleibende Hauptabschnitt des Widerlagerbechers ausgebildet ist. Dadurch wird bei praktisch unverminderter radialer Festigkeit der Steuerfeder eine weichere axiale Verformbarkeit der Steuerfederscheibe erzielt.

Eines der Hauptprobleme beim Einsatz solcher Auflager, insbesondere im Bereich der Fahrzeugtechnik, ist immer wieder die mangelnde akustische Abkopplung und/oder Dämmung zwischen Auflager und Widerlager. Dies trifft insbesondere für die gebräuchlichen Hydrolager zu, bei denen am Auflastträger, in der Regel also motorseitig, auftretende Körperschallschwingungen unmittelbar auf das Dämpfungsfluid und von diesem direkt auf das Widerlager, also die Karosserie, übertragen werden. Bei dem Lager gemäß der Erfindung wird diese akustische Ankopplung, die als "akustischer Kurzschluß" gesehen werden kann, vorzugsweise dadurch wirksam ausgeschaltet, daß die in den mit dem Dämpfungsfluid gefüllten Innenraum des verkapselten Auflagers hineinweisenden Oberflächenbereiche des Auflastträgers mit einer den Erfordernissen entsprechend dick ausgebildeten Elastomerdämmschicht vollständig beschichtet oder kaschiert sind.

Bei der vorstehend beschriebenen Ausgestaltung des Auflagers gemäß der Erfindung werden Schwingungen mit relativ kleinen Amplituden, in der Regel also die höher frequenten akustischen Schwingungen, bei aufgabengemäß sehr weicher Federung mit hohem Wirkungsgrad gedämpft. Für Schwingungen mit größerer Amplitude wie sie insbesondere im niederfrequenten akustischen Bereich, insbesondere um oder unter 20 Hz, auftreten, müssen im Rahmen dieses Dämpfungssystems weitere, genauer gesagt ergänzende, Dämpfungsmaßnahmen ergriffen werden. Zu diesem Zweck, also zum Zweck der effektiven Dämpfung auch von Schwingungen mit relativ großer Amplitude, weist das Auflager gemäß der Erfindung einen aus Kolbenkopf, Schaft und Kolbenfuß bestehenden klöppelartigen Kolben auf, der mit seinem Fuß mit zumindest axialem, vorzugsweise zusätzlich auch radialem Spiel, am Auflastträger aufgehängt ist und mit seinem Kopf verschiebbar und zumindest im wesentlichen paßgenau in ein Zylinderrohr taucht, das am Boden des Widerlagerbechers befestigt ist, auflagerseitig offen ausgebildet ist und in die vorzugsweise als dickwandiger Zylinderring ausgebildete Tragfeder hineinragt.

Primär aus Gründen der akustischen Dämmung, durchaus aber auch aus Gründen der Beeinflussung der Dämpfungskenndaten des Auflagers, ist der Kolbenkopf des Kolbens vollständig mit einem Elastomer ummantelt. Dabei ist der Kolbenkopf zum Zwecke des Erhalts der auch radialen elastischen Beweglichkeit zwischen Auflager und Widerlager kugelförmig, eiförmig oder tropfenförmig oder birnenförmig ausgebildet, und zwar je nach Art der anwendungsspezifischen Anforderungen.

Der auflagerseitig mit vollem Querschnitt offene Zylinder, der in der Regel als Zylinderrohr ausgebildet sein wird, ist an seinem gegenüberliegenden becherbodenseitigen Ende entweder geschlossen oder nur mit einer Drosselöffnung versehen oder mit einem ebenfalls drosselnden Rückschlagventil, das vom Zylinderinnenraum in den umgebenden Widerlagerbecher hinein öffnet, versehen. Wenn das Zylinderrohr becherbodenseitig geschlossen ausgebildet ist, ist der Tauchkolbenkopf durch seine Abmessungen und/oder die Art seiner Gummierung so ausgelegt, daß zwischen dem Außenmantel des Kolbenkopfes und der Innenwand des Zylinders ein Drosselringspalt entweder gebildet ist oder beim Einschwingvorgang sich ausbilden kann, wenn beim Einschwingen des Auflastträgers der Kolben in den mit Dämpfungsfluid gefüllten Zylinder niedergestoßen wird. Beim Rückschwingvorgang strömt dann das verdrängte Dämpfungsfluid durch die Saugwirkung am Zylinderboden wieder in den Dämpfungszylinder zurück.

Wie bereits erwähnt, ist der Kolbenfuß unter dem Auflastträger an diesem aufgehängt oder angelenkt. Von besonderer Bedeutung für die Gesamtdämpfungscharakteristik des Auflagers ist dabei, daß diese Aufhängung des Dämpfungskolbenfußes am Auflastträger mit einem ausreichend weiten axialen Spiel erfolgt, das vorzugsweise zumindest so groß zu bemessen ist, daß der Auflastträger bei Beaufschlagung mit Schwingungen kleinerer Amplituden frei, also ohne Mitnahme des Dämpferkolbens, schwingen kann. Erst bei Einwirkung größerer Amplituden, genauer gesagt, bei Einwirkung von Amplituden, die größer als das jeweils vorgesehene Spiel zwischen Dämpfungskolben und Auflastträger sind, wird dann auch der Dämpfungskolben vom Auflastträger mitgenommen und im Dämpfungszylinder axial verschoben.

Die Aufhängung des Dämpfungskolbenfußes im Auflastträger erfolgt dabei vorzugsweise in einer den Kolbenfuß umgreifenden Ausnehmung des Auflastträgers, die vollständig mit einer Elastomerschicht ausgekleidet ist, die ihrerseits wiederum vorzugsweise mit der Steuerscheibe einstückig ausgebildet ist, die den Auflastträger umschließt.

In diesem Zusammenhang ist wiederum hervorzuheben, in wie vielfältiger Weise und mit wie einfachen Mitteln die Dämpfungskenndaten des Auflagers gemäß der Erfindung eingestellt werden können, und zwar sowohl für den Bereich der Schwingungen mit kleiner Amplitude als auch für den Bereich von Schwingungen mit großer Amplitude mit einfachsten Mitteln, wie beispielsweise der Einstellung des Spiels zwischen Kolbenfuß und Auflastträger, der Gestaltung des Kolbenkopfes, den relativen Abmessungen von Zylinderinnenmantel und größtem Kolbenkopfdurchmesser, sowie der Festigkeit und der Dicke der Elastomerschicht auf dem Kolbenkopf. Außerdem wirken sich die Dicke und der Durchmesser der Steuerfederscheibe, die durch das beim Einschwingen verdrängte Dämpfungsfluid verformt wird, auf die Dämpfungscharakteristik aus.

Die Erfindung ist im folgenden anhand von Ausführungsbeispielen in Verbindung mit den Zeichnungen näher erläutert. Es zeigen:

Fig. 1    im Axialschnitt ein erstes Ausführungsbeispiel des Auflagers; und

Fig. 2 im Axialschnitt und in Teildarstellung eine Variante des in Fig. 1 dargestellten Ausführungsbeispiels des Auflagers.

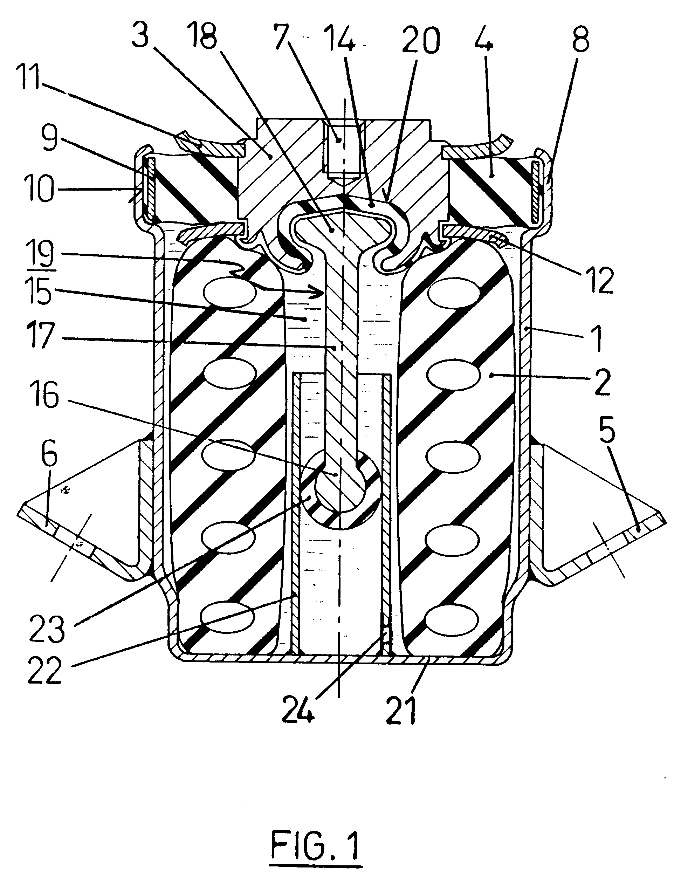

In der Fig. 1 ist im Axialschnitt als Ausführungsbeispiel des Auflagers gemäß der Erfindung ein sogenanntes Motorlager für die Lagerung des Antriebsaggregats eines Kraftfahrzeugs dargestellt. Das Lager besteht aus einem Widerlagerbecher 1, in den eine Tragfeder 2 eingesetzt ist, auf der ein Auflastträger 3 aufliegt, an den wiederum eine scheibenförmige, radial komprimierte, in axialer Richtung bistabile Steuerfederscheibe 4 angekoppelt ist, die den Auflastträger 3 rings umschließt und gasdicht und flüssigkeitsdicht mechanisch fest mit diesem verbunden ist. Die Tragfeder 2 ist eine weiche Lochgummifeder. Am Widerlagerbecher 1 sind seitlich Befestigungselemente 5, 6 angeordnet, über die der Widerlagerbecher 1 fest mit einem Widerlager, hier dem Chassis eines Kraftfahrzeugs, verbunden ist. Gleicherweise ist der Auflastträger 3 mit einem als Blindloch ausgebildeten Schraubgewinde 7 versehen, über das die zu lagernde Auflast, hier der Motorblock eines Kraftfahrzeuges, an das Auflager anschließbar ist.

Der mechanisch feste und gasdichte und flüssigkeitsdichte Verbund aus dem Auflastträger 3 und der Steuerfederscheibe 4 sind ebenfalls gasdicht und fluiddicht im Kragen 8 des Widerlagerbechers 1 axial fixiert eingesetzt. Die Fixierung erfolgt dabei vorzugsweise durch einen Klemmring 9, der in eine durch Umbördeln geschlossene Nut 10 im Kragen 8 des Widerlagerbechers 1 eingesetzt ist.

Für eine optimale Funktion des Auflagers ist es erforderlich, daß die radial unter Kompression vorgespannte Steuerfederscheibe 4 zumindest im wesentlichen in der Ebene ihrer Hauptoberflächen gehalten ist. Diesem Zweck dienen in der in Fig. 1 gezeigten Weise zwei zum Rand hin von der Steuerfederscheibe 4 weggebogene Federweg-Begrenzerscheiben 11,12, die am Auflastträger 3 zu beiden Seiten der Hauptoberfläche der Steuerfeder 4 und an dieser einspannseitig anliegend befestigt sind.

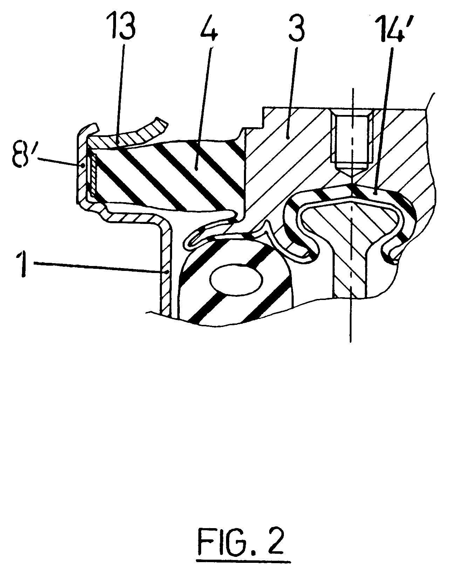

In analoger Weise ist in der Fig. 2 ein Anschlagscheibenring 13 gezeigt, der ebenfalls der Stabilisierung der Steuerfeder 4 in der Neutrallage dient, im Gegensatz zu den in Fig. 1 gezeigten Anschlagscheiben 11,12 jedoch nicht am Auflastträger 3 sondern am Kragen 8 des Widerlagerbechers 1 durch Umbördeln des Kragenrandes befestigt ist.

Bei der in Fig. 2 gezeigten Abänderung des in Fig. 1 gezeigten Auflagers ist weiterhin der deutlich im Querschnitt vergrößerte Kragenbereich 8' des Widerlagers 1 zu erkennen.

In den beiden in den Figuren dargestellten Ausführungsbeispielen sind die innen im Widerlagerbecher 1 liegenden Oberflächenbereiche des Auflastträgers 3 vollständig mit einer dämmenden Elastomerschicht 14 beschichtet, die vor allem der akustischen Dämmung und Abkopplung zwischen dem Auflastträger 3 und einem im Lager eingefüllten Dämpfungsfluid 15 dient. Dabei ist in dem in Fig. 2 gezeigten Ausführungsbeispiel die Elastomerbeschichtung 14' einstückig mit der Steuerfederscheibe 4 ausgespritzt. Sowohl die Steuerfederscheibe 4 als auch die Elastomerbeschichtung 14' sind dabei in einem Arbeitsgang um den Auflastträger 3 herum gespritzt und an diesen anvulkanisiert.

In der aus Fig. 1 ersichtlichen Weise ist am Auflastträger 3 ein aus einem Kolbenkopf 16, einem Kolbenschaft 17 und einem Kolbenfuß 18 bestehender klöppelartiger Kolben 19 mit seinem Kolbenfuß 18 mit axialem und radialem Spiel in einer umgreifenden Ausnehmung 20 aufgehängt, die an der zum Widerlagerbecherboden 21 weisenden Unterseite des Auflastträgers 3 ausgebildet ist.

Die Oberfläche der Ausnehmung 20 ist vollständig von der Elastomerbeschichtung 14 ausgekleidet. Der Kolbenkopf 16 taucht verschiebbar und zumindest im wesentlichen paßgenau in ein Zylinderrohr 22 ein, das am Boden 21 des Widerlagerbechers 1 befestigt ist. Der Kolbenkopf 16 ist kugelförmig ausgebildet und vollständig mit einer relativ dicken Elastomerschicht 23 ummantelt.

Am becherbodenseitigen Fuß des Zylinderrohrs 22 ist eine kleine Drosselöffnung 24 ausgebildet, die beim Einschwingen des Auflastträgers 3 und dem Niederstoßen des Kolbens 19 in den Zylinder 22 ein gedrosseltes Ausströmen des Dämpfungsfluids aus dem Zylinder 22 in den umgebenden Raum im Widerlagerbecher 1 ermöglicht.

Die beim Einschwingen des Auflastträgers 3 verdrängte Dämpfungsflüssigkeit weicht dabei vom axialen Zentralbereich in den peripheren Bereich des Widerlagerbechers 1 aus und baut einen die Steuerscheibe 4 entsprechend verformenden Druck nach axial auswärts auf.

Das in der Fig. 1 gezeigte Motorlager zeichnet sich durch eine sehr weich verlaufende Federkennlinie, durch eine hohe, insbesondere radiale mechanische Festigkeit und Federsteifigkeit, durch eine außerordentlich gute akustische Abkopplung des Auflastträgers 3 von den Widerlageranschlußstücken 5,6, sowie eine hochwirksame Dämpfung sowohl im Bereich kleiner Amplituden (und hoher Frequenzen), als auch im Bereich großer Amplituden (und niedriger Frequenzen) auf.

## Patentansprüche

1. Auflager mit einem Widerlagerbecher (1), in dem eine weiche Tragfeder (2) aus einem Elastomer eingesetzt ist, auf der ein Auflastträger (3) aufliegt, an den wiederum eine scheibenförmige, unter radialer Stauchung in ihrer neutralen Hauptebene gehaltene bistabile Steuerfederscheibe (4) angekoppelt ist, die dementsprechend in Richtung ihrer Normalen eine Federkonstante mit einem Wert von Praktisch gleich Null und eine hohe Steifigkeit in der neutralen Radialebene aufweist und den Auflastträger (3) in der Weise rings umschließt, daß der Verbund aus der Steuerfederscheibe (4) und dem Auflastträger (3) den Widerlagerbecher (1) hermetisch gas- und flüssigkeitsdicht verschließt, und mit einem durch den Auflastträger (3) betätigten Kolben (19), der zumindest im wesentlichen paßgenau in ein Zylinderrohr (22) taucht, das becherbodenseitig geschlossen oder mit Drosselöffnungen (24) versehen oder mit mindestens einem von innen nach außen in den Widerlagerbecher hinein öffnenden Rückschlagventil oder derart ausgebildet ist, daß eine am Kolbenkopf (16) vorgesehene Gummierung (23) so ausgelegt ist, daß zwischen dem Außenmantel des Kolbenkopfes und der Innenwand des Zylinders ein Drosselringspalt entweder gebildet ist oder sich beim Einschwingen und Ausschwingen des Lagers ausbilden kann, wobei der verschlossene Widerlagerbecher (1) vollständig mit einem Dämpfungsfluid (15) gefüllt ist und beim Tauchen des Kolbens verdrängtes Dämpfungsfluid die Steuerfeder axial dehnend verformen kann.

2. Auflager nach Anspruch 1,
   dadurch **gekennzeichnet,**
   daß der Kolben (19) klöppelartig gestaltet ist und einen Kolbenkopf (16), einen Schaft (17) und einen Kolbenfuß (18) aufweist, und daß der Kolbenfuß (18) mit zumindest einem axialen Spiel am Auflastträger (3) aufgehängt ist.

3. Auflager nach einem der Ansprüche 1 oder 2,
   **gekennzeichnet** durch
   einen Kragenabschnitt (8') des Widerlagerbechers (1), der einen größeren inneren Querschnitt als der restliche Teil des Widerlagerbechers (1) hat.

4. Auflager nach einem der Ansprüche 1 bis 3,
   **gekennzeichnet** durch
   mindestens einen Federwegbegrenzer für die Steuerfeder (4) in Form von einer oder zwei übereinanderliegend quer zur Richtung der Federauslenkung der Tragfeder (2) und der Steuerfeder (4) angeordnete und entweder am Auflastträger (3) oder am Kragen (8;8') des Widerlagerbechers (1) gehalterte plane oder profilierte Anschlagscheiben (11,12) oder Anschlagscheibenringe (13).

5. Auflager nach einem der Ansprüche 1 bis 4,
   dadurch **gekennzeichnet,**
   daß die innen im Widerlagerbecher (1) liegenden Oberflächenbereiche des Auflastträgers (3) vollständig mit einer dämmenden Elastomerschicht (14) beschichtet sind, wobei eine solche Elastomerschicht (14') insbesondere einstückig mit der Steuerfederscheibe (4) ausgebildet ist.

6. Auflager nach einem der Ansprüche 1 bis 5,
   dadurch **gekennzeichnet,**
   daß der Kolbenkopf (16) kugelförmig, eiförmig oder tropfenförmig ausgebildet ist.

7. Verwendung des Auflagers nach einem der Ansprüche 1 bis 6 als weiches Motorlager im Automobilbau.

## Claims

1. Support having an abutment cup (1) in which is inserted a soft bearing spring (2) consisting of an elastomer, on which there rests a load bearer (3), to which is coupled in turn a disc-shaped, bistable control spring disc (4), which is held in its neutral principal plane with radial compression, accordingly has, in the direction of its normal, a spring constant with a value virtually equal to zero and a high stiffness in the neutral radial plane and surrounds the load bearer (3) all the way round in such a way that the composite consisting of the control spring disc (4) and the load bearer (3) seals the abutment cup (1) hermetically in gas-tight and fluid-tight fashion, and having a piston (19) which is actuated by the load bearer (3) and plunges with an at least substantially accurate fit into a cylindrical tube (22), which is closed at the cup-bottom side or is provided with orifices (24) or is designed with at least one nonreturn valve opening from the inside towards the outside into the abutment cup or is designed in such a way that a rubber coating (23) provided on the piston head (16) is configured in such a way that an annular restriction gap is either formed or can form when the mount oscillates inwards and outwards, between the outer surface of the piston head and the inner wall of the cylinder, the sealed abutment cup (1) being completely filled with a damping fluid (15) and damping fluid displaced when the piston penetrates being able to deform the control spring, expanding it axially.

2. Support according to Claim 1, characterised in that the piston (19) is of clapper-like configuration and has a piston head (16), a shank (17) and a piston foot (18), and in that the piston foot (18) is suspended with at least an axial play on the load bearer (3).

3. Support according to either of Claims 1 or 2, characterised by a collar portion (8') of the abutment cup (1) which has a larger internal cross-section than the remaining part of the abutment cup (1).

4. Support according to one of claims 1 to 3, characterised by at least one spring-travel limiter for the control spring (4) in the form of one or two smooth or profiled stop discs (11, 12) or stop disc rings (13) arranged one above the other transversely to the direction of the spring deflection of the bearing spring (2) and the control spring (4) and held either at the load bearer (3) or at the collar (8; 8') of the abutment cup (1).

5. Support according to one of Claims 1 to 4, characterised in that those surface regions of the load bearer (3) which lie inside the abutment cup (1) are coated completely with an insulating elastomer layer (14), such an elastomer layer (14') being, in particular, formed integrally with the control spring disc (4).

6. Support according to one of Claims 1 to 5, characterised in that the piston head (16) is of spherical, oval or tear-shaped design.

7. Use of the support according to one of Claims 1 to 6 as a soft engine mount in automobile construction.

**Revendications**

1. Support comportant un boîtier formant contre-appui (1), dans lequel est place un ressort porteur (2) souple, constitue d'un élastomère, sur lequel repose un support d'appui (3), sur lequel vient, à son tour, s'accoupler un disque pilote à ressort (4), bistabile, en forme d'assiette, maintenu dans son plan principal neutre sous l'effet d'une déformatien radiale, ce disque présentant, en conséquence , dans la direction de sa normale, une constante de ressort de valeur pratiquement nulle et: suivant le plan radial neutre, une rigidité élevée suivant le plan radial neutre, et entourant le support d'appui (3) en formant un anneau de façon que la liaison réalisée entre le disque pilote à ressort (4) et le support d'appui (3) ferme hermétiquement aux gaz et aux liquides le boîtier formant contre-appui (1), et comportant un piston (19), actionne par le support d'appui (3) et plongeant, avec une précision essentiellement de qualité ajustage, dans un tube cylindrique (22), qui est ferme du côte du fond du boîtier, ou bien est muni d'ouvertures de laminage, ou bien est réalisé avec un clapet anti-retour s'ouvrant de l'intérieur vers l'extérieur dans le boîtier formant contre-appui (1), et de façon qu'un garnissage en caoutchouc (23), prevu sur la tête de piston (16), soit disposé de façon à réaliser un interstice de laminage entre la surface externe de la tête de piston (16) et la paroi intérieure du cylindre, ou bien que cet interstice puisse se réaliser, au moment des oscillations d'enfoncement ou de remontée du support, étant entendu que le boîtier formant contre-appui (1), fermé, est complêtement rempli avec un fluide faisant office d'amortisseur (15) et que, lorsque le piston plonge, le fluide d'amortissement puisse déformer, par dilatation axiale, le ressort de commande.

2. Support suivant la revendication 1, caractérisé en ce que le piston (19) est réalisé sous la forme d'un battant de cloche, et comporte une tête de piston (16), une tige (17) et un pied de piston (18), et en ce que le pied de piston (18) est suspendu au support d'appui (3) avec, au moins, un jeu axial.

3. Support suivant la revendication 1 ou la revendication 2, caractérisé par une partie formant collet (8') du boîtier formant contre-appui (1), ce collet présentant une section intérieure plus grande que le reste du boîtier formant contre-appui (1).

4. Support suivant l'une quelconque des revendications 1 à 3, caractérisé par, au moins, un limiteur de course de ressort du disque pilote (4), sous la forme d'un ou de deux disques de butée (11, 12), ou anneaux de disques de butée (13), plans ou profilés, placés l'un au desssus de l'autre, disposés transversallement par rapport à la direction du ressort porteur (2) et du disque pilote (4) et maintenus soit sur le support d'appui (3), soit sur le collet (8, 8') du boîtier formant contre-appui (1).

**5.** Support suivant l'une quelconque des revendications 1 à 4, caractérisé en ce que les zones des surfaces externes du support d'appui (3), situées à l'intérieur du boîtier formant contre-appui (1), sont complètement recouvertes par une couche d'élastomère amortisseur (14), une telle couche d'élastomère amortisseur (14') étant, en particulier, réalisée de façon à constituer une seule pièce avec le disque pilote à ressort (4).

**6.** Support suivant l'une quelconque des revendications 1 à 5, caractérise en ce que la tête de piston (16) à une forme de boule d'oeuf ou de goutte.

**7.** Utilisation du support suivant l'une quelconque des revendications 1 à 6, comme support moteur souple, dans l'industrie de construction automobile.

FIG. 1

13  4  3  14'

8'

1

FIG. 2